# DEMANDE DE BREVET EUROPEEN

(11) **EP 0 550 246 A1**
(43) Date de publication de la demande: **07.07.1993**
(21) Numéro de dépôt: 92311719.6
(22) Date de dépôt: 22.12.1992
(51) Int. Cl.: B29C 65/08

(54) **Procédé de soudage par ultrasons et dispositif pour mettre en oeuvre le procédé**

(30) Priorité: 03.01.1992 FR 9200015
(71) Demandeur: KAYSERSBERG PACKAGING S.A., 68240 Kaysersberg (FR)
(72) Inventeur: Sipos, Laszlo, F-68000 Colmar (FR); Meyer, Thierry, F-68230 Wihrauval (FR)
(74) Mandataire: Johnson, Terence Leslie

(57) **Abrégé**

Le procédé de soudage par ultrasons de plaques (1, 2) du type à double paroi entretoisées (22, 12) consistant à appliquer les plaques (1, 2) l'une sur l'autre sur une enclume (3) et à serrer avec une pression déterminée ces deux plaques (1, 2) au moyen d'une sonotrode (4) maintenue en vibration, est caractérisé en ce que le procédé utilise une sonotrode ou une enclume avec une semelle (4) pourvue d'une pluralité de barrettes (41) d'épaisseur déterminée en fonction des caractéristiques dimensionnelles des plaques (1, 2). les barrettes (41) formant un angle avec l'axe longitudinal de la semelle (40). à faire pénétrer ladite sonotrode ou enclume d'une profondeur correspondant au moins à l'épaisseur des barrettes pour amener la semelle en contact avec une paroi (10).

## Description

La présente invention concerne un procédé de soudage par ultrasons et un dispositif pour mettre en oeuvre le procédé.

Il est connu de souder par ultrasons des pièces en matière plastique en appliquant un outil vibrant - une sonotrode - perpendiculairement à leur zone de contact. L'application d'une pression bien déterminée conjuguée à l'action des vibrations produit un frottement intense localisé sur l'interface de l'assemblage. La chaleur dégagée fond brusquement la matière qui s'écoule et se mélange. Le soudage est dit "proche" lorsque la sonotrode vibrante est appliquée très près du joint d'assemblage et ce type de soudage est nécessaire pour des matériaux mauvais conducteurs d'ondes ultrasoniques. Ce peut être le cas des plastiques ayant un faible module de rigidité. Le soudage dit "lointain" est utilisé lorsque la sonotrode n'est pas appliquée dans le voisinage immédiat du point de soudure. Le succès de cette technique de soudage "lointain" dépend essentiellement de l'aptitude des matériaux à propager les vibrations sans amortissement. C'est le cas des matériaux rigides à module d'élasticité élevée tels que les polystyrènes standards, polycarbonates, ABS, etc... Pour chaque matériau, il existe une distance critique au-delà de laquelle il n'y a plus de soudage homogène.

Cette technique de soudage lointain permet d'assembler des objets de géométrie complexe avec une sonotrode, de forme très simple.

Lorsque l'on essaie d'appliquer une de ces deux techniques au soudage de plaques à double paroi entretoisées, constituées en polypropylène, on bute sur deux difficultés.

La technique de la soudure proche ne peut pas être appliquée car la sonotrode et l'enclume sont elles-mêmes éloignées de la surface de soudage des deux plaques. Lorsque l'on utilise la méthode du soudage lointain, l'épaisseur des parois étant trop faible, il se produit un phénomène bien connu dans la technique du soudage par ultrasons appelé "flash central" dans lequel les parois cèdent en leur centre - entre deux entretoises - sous l'effet des ultrasons.

Un premier but de l'invention est donc de pallier les inconvénients de l'art antérieur en supprimant le phénomène de "flash central" tout en permettant le soudage de plaques alvéolaires ou entretoisées.

Ce but est atteint par le fait que le procédé de soudage par ultrasons de plaques à double paroi entretoisées consistant à appliquer les deux plaques sur une enclume et à serrer avec une pression déterminée ces deux plaques par une sonotrode maintenue en vibration à une fréquence ultrasonique est caractérisé en ce que le procédé utilise une sonotrode ou une enclume avec une semelle pourvue d'une pluralité de barrettes d'épaisseur déterminée en fonction des caractéristiques dimensionnelles des plaques, les barrettes formant un angle avec l'axe longitudinal de la semelle et en ce que l'on fait pénétrer ladite sonotrode d'une profondeur correspondant au moins à l'épaisseur des barrettes pour amener la semelle en contact avec une paroi.

Un autre but de l'invention est de proposer un dispositif de soudage permettant de supprimer les inconvénients de l'art antérieur lors du soudage de plaques alvéolaires.

Ce but est atteint par le fait que l'une des deux pièces, sonotrode ou enclume, comporte une semelle avec une pluralité de barrettes d'épaisseur déterminée en fonction des caractéristiques dimensionnelles des plaques, ces barrettes formant un angle avec l'axe longitudinal de la semelle.

Selon une autre particularité ladite semelle est disposée paralèllement à la direction des entretoises.

Selon une autre particularité, ladite semelle est disposée perpendiculairement à la direction des entretoises.

Selon une autre particularité, les barrettes ont une profondeur de 2 mm pour des plaques d'une épaisseur de 2 à 3,5 mm d'un matériau en polypropylène et ayant un grammage compris entre 250 et 1500 grammes.

Selon une autre particularité, la largeur de la semelle est de 10 à 15 mm.

Selon une autre particularité, les barrettes sont moletées.

Selon une autre particularité, l'angle des barrettes par rapport à l'axe longitudinal de la semelle est compris entre 35 et 65°

Selon une autre particularité, la largeur des barrettes est comprise entre 3 et 6 mm.

Selon une autre particularité, le pas des barrettes est compris entre 15 et 25 mm.

D'autres caractéristiques et avantages de la présente invention apparaîtront plus clairement à la lecture de la description ci-après faite en référence aux dessins annexés dans lesquels :

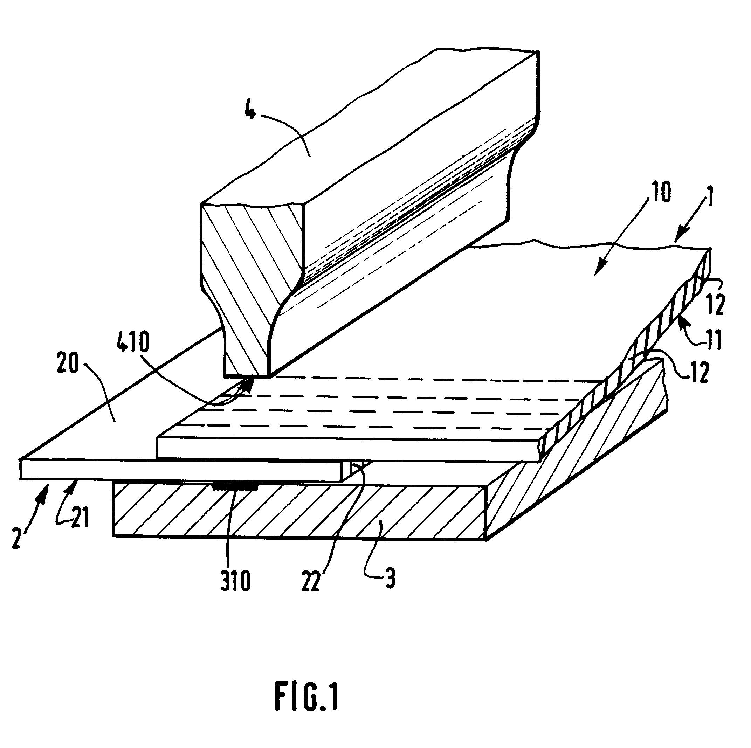

- la Figure 1 représente une vue en perspective du dispositif permettant la mise en oeuvre du procédé selon l'invention ;
- la Figure 2 représente une vue de dessous de la semelle d'une sonotrode utilisée dans le dispositif ;
- la Figure 3 représente une vue de côté de la sonotrode ;
- la Figure 4 représente une vue de dessous de la sonotrode.

Le dispositif permettant la mise en oeuvre du procédé est constitué d'une enclume (3) et d'une sonotrode (4). Sur l'enclume (3) est disposée une première plaque (2) de matériau commercialisé sous la marque "Akylux" par la Société Kaysersberg Packaging qui est constituée de deux parois planes (20, 21) maintenues à distance l'une de l'autre par des cloisons formant des entretoises (22) régulièrement espacées. De même, une deuxième plaque du même matériau (1) est constituée de deux parois (10, 11) entretoisées par des entretoises (12).

Ce type de plaque est bien connu en soi et est fabriqué par extrusion d'une matière thermoplastique à travers une filière plane de forme appropriée puis calibrage entre des panneaux en dépression.

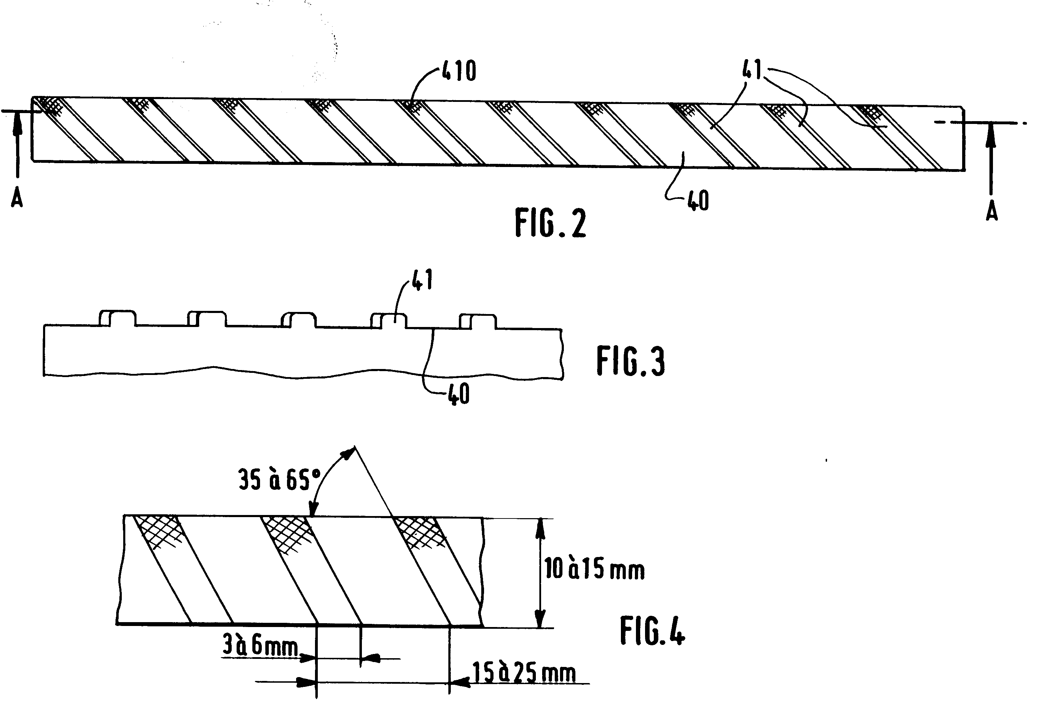

La Figure 2 représente une vue de dessous de la sonotrode qui est, comme on peut le voir sur cette figure, constituée d'une semelle (40) sur laquelle des barrettes (41) sont formées en relief. Ces barrettes comportent à leur angle supérieur des chanfreins et sur leur surface supérieure un moletage (410). On pourra remplacer le moletage (410) par tout autre motif géométrique ou non, tel que par exemple, une inscription indiquant la provenance ou les sociétés fabriquant les plaques soudées. Les barrettes ont une épaisseur de 2 mm, sont disposées de préférence selon un angle de 45 degrés par rapport à la direction longitudinale de la semelle (40) et espacées les unes des autres d'un pas qui est de l'ordre de 20 mm. Pour des plaques d'"akylux" dont l'épaisseur est comprise entre 2 et 5 mm, avec des parois d'une épaisseur comprise entre 0,1 et 0,5 mm, et ayant un grammage compris entre 250, pour les plaques de 2 mm, et respectivement 1500 g pour les plaques de 3,5 mm, on utilise de préférence une sonotrode dont les barrettes sont espacées d'un pas compris entre 15 et 25 mm et dont la semelle a une largeur de 10 à 15 mm. Ces barrettes pourront être inclinées selon un angle variant entre 35 à 65° et avoir une épaisseur comprise entre 3 et 6 mm. L'enclume (3) peut être également pourvue du même motif (310) que celui figurant sur les barrettes (410).

Selon un autre mode de réalisation, on utilise une enclume présentant des barrettes en relief selon la disposition indiquée ci-dessus et une sonotrode plane.

Lorsque, dans le procédé, la sonotrode (4) est approchée de la plaque (1), elle est appliquée avec une pression déterminée sur les deux plaques (1, 2) et dans un premier temps, la sonotrode étant mise en vibration, les barrettes (41) pénètrent d'une profondeur correspondant à leur épaisseur, provoquant dans la plaque supérieure une empreinte femelle du motif de la sonotrode (4). La vibration de la sonotrode étant entretenue, celle-ci continue à pénétrer légèrement dans les deux plaques de matériau, la plaque inférieure (2) est alors légèrement écrasée sans que toutefois les entretoises (22) et (12) disparaissent et soient complètement écrasées. La soudure s'effectue au contact des surfaces supérieures (20) de la plaque inférieure (2) et de la surface inférieure (11) de la plaque supérieure (1).

En procédant ainsi, on obtient une bonne liaison des deux plaques sur une largeur comprise entre 10 et 15 mm, tout en appliquant des pressions qui évitent l'écrasement du matériau entretoisé.

On a représenté une opération de soudage avec une sonotrode appliquée perpendiculairement à la direction des entretoises mais le résultat est tout aussi satisfaisant si la sonotrode est appliquée selon une direction parallèle à celle des entretoises car les barrettes forment toujours un angle avec ces dernières.

Si on avait utilisé les procédés classiques avec une sonotrode de largeur de semelle beaucoup plus faible, 5 mm, on aurait certes soudé les plaques, mais au niveau de la soudure, le matériau aurait été complètement écrasé, et, chaque plaque, qui au départ avait une épaisseur de 2,5 mm, se retrouverait avoir une épaisseur de 0,2 mm, et, l'assemblage des deux plaques (1, 2) une épaisseur de 0,4 mm, puisque chaque paroi aurait à peu près une épaisseur de 0,1 mm. Lorsque le procédé traditionnel est utilisé avec une sonotrode disposée perpendiculairement aux entretoises, les entretoises sont complètement écrasées. Lorsque la sonotrode est disposée parallèlement aux entretoises, il se produit pratiquement une coupure du matériau ou tout au moins un rainage de la plaque qui est plus profond que les raines que l'on peut pratiquer sur ce matériau pour lui donner. par exemple, une forme de caisse. Un tel procédé est par conséquent gênant lorsque l'on veut constituer des caisses dans un tel matériau car la soudure constituerait un point de faiblesse de la caisse.

Au contraire, le procédé de l'invention, utilisé pour la fabrication des caisses avec des matériaux du type décrit ci-dessus donne des résultats tout à fait satisfaisants sans affaiblir la résistance du matériau au niveau de la soudure, ceci, en plus des avantages liés à la suppression du phénomène de "flash central".

D'autres modifications à la portée de l'homme de métier font également partie de l'esprit de l'invention.

## Revendications

1. Procédé de soudage par ultrasons de plaques (1, 2) du type à double paroi entretoisées (22, 12) consistant à appliquer les plaques (1, 2) l'une sur l'autre sur une enclume (3) et à serrer avec une pression déterminée ces deux plaques (1, 2) au moyen d'une sonotrode (4) maintenue en vibration, caractérisé en ce que le procédé utilise une sonotrode ou une enclume avec une semelle (4) pourvue d'une pluralité de barrettes (41) d'épaisseur déterminée en fonction des caractéristiques dimensionnelles des plaques (1, 2), les barrettes (41) formant un angle avec l'axe longitudinal de la semelle (40), et consiste à faire pénétrer ladite sonotrode ou enclume d'une profondeur correspondant au moins à l'épaisseur des barrettes pour amener la semelle en contact avec une paroi (10).

2. Procédé selon la revendication 1, caractérisé en ce que ladite sonotrode ou enclume (4) est disposée perpendiculairement à la direction des entretoises (12, 22).

3. Procédé selon la revendication 1, caractérisé en ce que ladite sonotrode ou enclume (4) est disposée parallèlement à la direction des entretoises (12, 22).

4. Semelle de sonotrode ou d'enclume pour soudage selon le procédé de la revendication 1, caractérisée en ce qu'elle comporte une pluralité de barrettes (41) d'épaisseur déterminée en fonction des caractéristiques dimensionnelles des plaques (1, 2), ces barrettes (41) formant un angle avec l'axe longitudinal de la semelle (40).

5. Semelle selon la revendication 4, caractérisée en ce que les barrettes (41) ont une profondeur de 2 mm pour des plaques (1, 2) d'une épaisseur de 2 à 3,5 mm d'un matériau en polypropylène et ayant un grammage compris entre 250 et 1500 g.

6. Semelle selon la revendication 5, caractérisée en ce que sa largeur est de 10 à 15 mm.

7. Semelle selon la revendication 5 ou 6, caractérisée en ce que les barrettes sont moletées.

8. Semelle selon la revendication 4, caractérisée en ce que l'angle des barrettes par rapport à son axe longitudinal est compris entre 35 et 65°.

9. Sonotrode selon la revendication 5 ou 7, caractérisée en ce que la largeur des barrettes est comprise entre 3 et 6 mm.

10. Electrode selon la revendication 9, caractérisée en ce que le pas des barrettes est compris entre 15 et 25 mm.
